# EUROPEAN PATENT SPECIFICATION

(11) **EP 0 593 271 B1**
(45) Date of publication and mention of the grant of the patent: **21.05.1997**
(21) Application number: 93308147.3
(22) Date of filing: 13.10.1993
(51) Int. Cl.: C08G 18/42

(54) **Method for producing lactic acid based polyurethane**
Verfahren zur Herstellung eines von Milchsäure abgeleiteten Polyurethans
Procédé de préparation d'un polyuréthane à base d'acide lactique

(30) Priority: 16.10.1992 FI 924699
(43) Date of publication of application: 20.04.1994
(73) Proprietor: NESTE OY, 06101 Porvoo (FI)
(72) Inventor: Seppälä, Jukka, SF-00960 Helsinki (FI); Selin, Johan-Fredrik, SF-00980 Helsinki (FI); Su, Tao, Nanning 530011 (CN)
(74) Representative: Woods, Geoffrey Corlett

(56) References cited:
- EP-A- 0 295 055
- EP-A- 0 446 156
- CHEMICAL ABSTRACTS, vol. 116, no. 24, 15 June 1992, Columbus, Ohio, US; abstract no. 236374q & JP-A- 4 013 710

## Description

The present invention relates to a method for producing lactic acid-based polyurethanes and to certain applications of the polyurethanes thus produced.

Lactic acid polymers have been produced by polymerizing lactide, which is a cyclic dimer of the lactic acid. The polylactic acid thus obtained has a high molecular weight and good physical properties. However, drawbacks have been technical difficulties in manufacturing lactide and, as a result, the poor total yield of the process. It is also possible to polymerize monomeric acid, but the molecular weight of the lactic acid oligomer thus obtained is so low, generally below 10,000, that the product is not appropriate as a plastic as such. The molecular weight of the oligomer has been increased by making it react with diol and by copolymerizing it thereafter with an isocyanate to form a polyurethane. Polyurethanes based on lactic acid have also been prepared using an equivalent method, starting from lactide, i.e. the dimeric acid.

Lactic acid polymers are biodegradable. For this reason, they have been used for medical applications, such as surgical applications, requiring high quality and purity of the product.

Production methods of lactic acid-based polyurethane have been described in some prior patent specifications. In U.S. Patent Specification No. 4,804,691 a method is disclosed, in which lactide is used as the starting material. The product obtained is intended for joining soft live tissues. In SU Patent Specification No. 1,016,314 and JP Application Publication No. 63,278,924, production methods of self-degradable polyurethanes appropriate for medical purposes, such as surgical purposes, are described, in which a polymer obtained from lactic acid and a diol, such as ethylene glycol, is copolymerized further with an isocyanate. In JP application specification No. 01,297,420 an equivalent method is disclosed, in which the product obtained is described as resistant and appropriate for a coating material. In JP application publication No. 55,054,322 a polyurethane based on lactic acid and a plurality of other starting materials is described, this polyurethane being, according to the said publication, among other things, resistant to solvents.

The object of the present invention is to provide a simpler production method than before for producing a lactic acid-based polyurethane, involving less cost than before, and enabling a wide variation of the properties of the product. The process of the invention is characterized in that monomeric lactic acid is first polymerized into an oligomer with a molecular weight of 500 to 10000 and that thereafter the oligomer is copolymerized with a diisocyanate which reacts with the free hydroxyl and carboxyl groups of the oligomer to form a polyurethane with a higher molecular weight.

In the process of the invention, the lactic acid oligomer is copolymerized directly, in a high (about 100%) yield, into a polyurethane without making it react first with a diol to increase the amount of the hydroxyl groups reacting. The result of the copolymerization is, at its simplest, a chain produced by alternating oligomer units and diisocyanate molecules, in which the isocyanate groups are joined to hydroxyl or carboxyl groups at the ends of the oligomer. In practice, the reactions are, however, more complex, depending, e.g., on the degree of purity of the starting materials, and they may lead also to crosslinked molecular structures.

The monomeric lactic acid used as starting material in the method of the invention can be prepared by fermentation of glucose. The lactic acid need not be pure. Instead, it may contain, for instance, reactive sugar residues which become bound as part of the polymer obtained. The process of the invention can be implemented on a large scale so that an inexpensive end product is obtained characterized by high biodegradability in nature. The product is therefore appropriate for packaging material, which decomposes in time when present in land fill. In addition, the product is particularly appropriate for agricultural purposes, since it degrades after use.

The starting material used in the invention can be L-, DL-, or D-lactic acid, or a mixture thereof. In the first phase of the method, the lactic acid is polymerized into an oligomer with a molecular weight of 500 to 10,000.

In the next, copolymerization phase, 5 to 70 percent by weight, preferably 10 to 50 percent by weight, of isocyanate and 30 to 95 percent by weight, preferably 50 to 90 percent by weight, of lactic acid oligomer can be reacted together to form the end product, the molecular weight of which can be up to several hundred thousands. The copolymerization may be accomplished at 50 to 200°C, preferably at 80 to 160°C, and the temperature is preferably raised towards the end of the reaction. The polymerization can be accomplished without a catalyst, or by using a catalyst such as tin (stannous) octoate, dibutyl tin laurate, dibutyl tin diacetate, or a tertiary amine, such as 1,4-diazo(2.2.2) bicyclo octane. The quantity of the catalyst is at most 2% of the total weight of the reaction mixture.

The isocyanate participating in the copolymerization according to the invention is preferably hexamethylene diisocyanate, diphenylmethane diisocyanate, toluene diisocyanate, or a mixture thereof. In addition to the said diisocyanates, a triisocyanate can also be used which produces crosslinking of the polyurethane obtained. Crosslinking may also result from impurities present in the starting materials. Suitable isocyanates are commercially available.

The invention includes within its scope the use of the polyurethane obtained as a material for disposable packages, agricultural film or planting pots, or as a coating for fertilizer granules. Such packages are, e.g., bottles or boxes which after use end up in land fills and decompose there by the action of bacteria and moisture. The agricultural films are, e.g., film sheets used in vegetable and berry cultivation, their purpose being to retain moisture and to prevent the soil from drying. When produced from a lactic acid-based polyurethane of the invention they, and also planting pots for saplings, decompose after use. As a coating for fertilizer granules, the polyurethane degrades with time and regulates the release of the fertilizing elements, e.g. nitrogen and can in this way prevent or reduce the possibility of the fertilizer being washed from the fields and polluting water ways.

The invention is illustrated by the following Examples. In Examples 1 to 4, the lactic acid oligomer was prepared by polymerizing commercially available, substantially pure lactic acid. Examples 5 and 6 show that the presence of a significant quantity of a sugar or an organic acid in the lactic acid does not cause any harm to the polymerization. The products of Examples 1 and 2 are suitable for use inter alia as biodegradable films and coatings while the foam products of Examples 3 to 6 are also biodegradable and suitable for use inter alia as planting substrates and for packaging purposes.

### Example 1

800 g of 90% aqueous solution of DL-lactic acid were poured into a 1,000 ml three-necked flask provided with a condenser and heated to 200°C in a nitrogen atmosphere for 20 hours. The lactic acid became polymerized into lactic acid oligomer having an average molecular weight of 1580.

20 g of the lactic acid oligomer thus obtained, 10.3 g hexamethylene diisocyanate and 0.05 g stannous octoate were mixed in a reaction vessel, and reacted first at 100°C for six hours, and then at 150°C for four hours. A plastic-resembling product partly soluble in CH₂Cl₂ and CHCl₃ was obtained. A film produced by casting a solution of this product was tough and flexible. Compared with the following Examples, the reaction time used in the present Example was shorter and the reaction temperature lower, and the product obtained was lighter in colour.

### Example 2

800 g of 90% aqueous solution of L-lactic acid were poured into a 1000 ml three-necked flask provided with a condenser and heated in nitrogen atmosphere to 200°C for 20 hours. The average molecular weight of the lactic acid oligomer obtained was 1700. 10 g of this oligomer and 10 g hexamethylene diisocyanate were polymerized in 100 ml reaction vessel without a catalyst. The reagents were diluted with 50 ml toluene. The reaction mixture was kept at 80°C for two hours, and the toluene was then distilled off from the solution at 115 to 160°C. When the mixture was then cooled to room temperature, it became a wax-like solid. 10 g of the lactic acid oligomer were then added and the mixture was heated to 127°C for 66 hours. The end product thus obtained was a yellow rubber-like elastomer at room temperature.

### Example 3

To 85.8 g of DL-lactic acid oligomer, obtained as described in Example 1, 25.8 g of toluene diisocyanate were added in four batches so that the addition of the last batch was completed eight hours before the copolymerization reaction ended. The reaction mixture was mixed during the reaction, but no catalyst was used. 60 ml toluene were included in the reaction mixture in order to obtain uniform mixing. The toluene was subsequently evaporated off at 140 to 190°C during 13 hours. Thereafter, the reaction was continued for 28 hours at 140°C.

The product thus obtained was kept for a few months at room temperature, and was then heated in an oven to 72°C. It expanded into a rigid, brittle foam with a density of about 0.16 g/cm³.

### Example 4

40 g of the DL-lactic acid oligomer obtained as described in Example 1 and 20 g of hexamethylene diisocyanate were copolymerized without a catalyst by keeping them for 10 hours at 140°C, then for 11 hours at 160°C, and finally for 48 hours at 180°C.

The product thus obtained was yellow in colour, strong and could be converted into a hard foam as described in Example 3.

### Example 5

195 g of 90% aqueous solution of DL-lactic acid and 5.0 g of glucose were poured into a reaction vessel provided with a condenser. The pressure in the vessel was reduced to 12 mm.Hg (1600 Pa) using a water jet pump, and the temperature was raised slowly from room temperature to 130°C. The total reaction time was 11 hours. The product obtained was a viscous liquid which was not fluid at room temperature. No separate solid glucose phase could be discerned. 21 g of the product of the first phase of the process, 12.6 g of hexamethylene diisocyanate, 0.08 g of stannous octoate and 0.11 g of 1,4 diazo(2.2.2)bicyclooctane were then mixed in a reaction vessel and heated with stirring to 110°C for four hours. The product obtained was a white, resilient, foamy substance with a density of about 0.16 g/cm³.

### Example 6

600 g of 90% aqueous solution of L-lactic acid and 59 g of succinic acid were poured into a round reaction vessel provided with a condenser. A nitrogen atmosphere was introduced into the vessel and the temperature of the mixture was raised slowly from room temperature to 180°C. The total reaction time was 20 hours. The product obtained was a viscous liquid which was not fluid at room temperature. 28 g of this intermediate product, 14 g of hexamethylene diisocyanate, 0.11 g stannous octoate, and 0.13 g of 1,4-diazo(2.2.2)-bicyclooctane were introduced into a reaction vessel and heated to 110°C for four hours. The end product was white, rigid and foamy.

## Claims

1. A method for producing a lactic acid-based polyurethane, characterised in that monomeric lactic acid is first polymerized into an oligomer with a molecular weight of 500 to 10,000 and that thereafter the oligomer is copolymerized with a diisocyanate which reacts with the free hydroxyl and carboxyl groups of the oligomer to form a polyurethane with a higher molecular weight.

2. Method according to claim 1, characterized in that 5 to 70 percent by weight of isocyanate and 30 to 95 percent by weight of the lactic acid oligomer are copolymerized to form the polyurethane.

3. Method according to any one of the preceding claims, characterized in that the isocyanate is hexamethylene diisocyanate, diphenylmethane diisocyanate, or toluene diisocyanate.

4. Method according to any one of the preceding claims, characterized in that the copolymerization is accomplished at 50 to 200°C, preferably 80 to 160°C.

5. Method according to any one of the preceding claims, characterized in that the copolymerization is accomplished without a catalyst.

6. Method according to any one of claims 1 to 4, characterized in that stannous octoate is used as a catalyst in the copolymerization.

7. Method according to any one of the preceding claims characterized in that the monomeric lactic acid to be polymerized includes a sugar, such as glucose, or an organic acid, such as succinic acid.

8. Use of the polyurethane produced by the method according to any one of the preceding claims as a material for disposable packages.

9. Use of the polyurethane produced by the method according to any one of claims 1 to 7 as a material for agricultural film or planting pots.

10. Use of the polyurethane produced by the method according to any one of claims 1 to 7 as a coating of fertilizer granules.

## Patentansprüche

1. Verfahren zur Herstellung eines Polyurethans auf Milchsäurebasis, dadurch gekennzeichnet, daß monomere Milchsäure zunächst zu einem Oligomeren mit einem Molekulargewicht von 500 bis 10 000 polymerisiert wird und anschließend das Oligomere mit einem Diisocyanat, das mit freien Hydroxyl- und Carboxylgruppen des Oligomeren reagiert, unter Bildung eines Polyurethans mit einem höheren Molekulargewicht copolymerisiert wird.

2. Verfahren nach Anspruch 1, dadurch gekennzeichnet, daß 5 bis 70 Gew.-% Isocyanat und 30 bis 95 Gew.-% Milchsäure-Oligomeres unter Bildung des Polyurethans copolymerisiert werden.

3. Verfahren nach einem der vorstehenden Ansprüche, dadurch gekennzeichnet, daß es sich beim Isocyanat um Hexamethylendiisocyanat, Diphenylmethandiisocyanat oder Toluoldiisocyanat handelt.

4. Verfahren nach einem der vorstehenden Ansprüche, dadurch gekennzeichnet, daß die Copolymerisation bei 50 bis 200 und vorzugsweise bei 80 bis 160°C durchgeführt wird.

5. Verfahren nach einem der vorstehenden Ansprüche, dadurch gekennzeichnet, daß die Copolymerisation ohne einen Katalysator durchgeführt wird.

6. Verfahren nach einem der Ansprüche 1 bis 4, dadurch gekennzeichnet, daß Zinn(II)-octoat als Katalysator bei der Copolymerisation verwendet wird.

7. Verfahren nach einem der vorstehenden Ansprüche, dadurch gekennzeichnet, daß die zu polymerisierende monomere Milchsäure einen Zucker, wie Glucose, oder eine organische Säure, wie Bernsteinsäure, enthält.

8. Verwendung des nach einem Verfahren gemäß den vorstehenden Ansprüchen erhaltenen Polyurethans als Material für Einwegverpackungen.

9. Verwendung des nach einem Verfahren gemäß den Ansprüchen 1 bis 7 erhaltenen Polyurethans als Material für landwirtschaftliche Folien oder Pflanzbehälter.

10. Verwendung des nach einem Verfahren gemäß einem der Ansprüche 1 bis 7 gebildeten Polyurethans als Überzug für Düngemittelgranulate.

## Revendications

1. Procédé de production d'un polyuréthane à base d'acide lactique, caractérisé en ce que de l'acide lactique monomère est d'abord polymérisé en un oligomère ayant une masse moléculaire de 500 à 10000 et en ce qu'ensuite l'oligomère est copolymérisé avec un diisocyanate qui réagit avec les groupes hydroxyle et carboxyle libres de l'oligomère pour former un polyuréthane de masse moléculaire supérieure.

2. Procédé selon la revendication 1, caractérisé en ce que 5 à 70 % en poids d'isocyanate et 30 à 95 % en poids de l'oligomère d'acide lactique sont copolymérisés pour former le polyuréthane.

3. Procédé selon l'une quelconque des revendications précédentes, caractérisé en ce que l'isocyanate est du diisocyanate d'hexaméthylène, du diisocyanate de diphénylméthane ou du diisocyanate de toluène.

4. Procédé selon l'une quelconque des revendications précédentes, caractérisé en ce que la copolymérisation est effectuée entre 50 et 200°C, de préférence entre 80 et 160°C.

5. Procédé selon l'une quelconque des revendications précédentes, caractérisé en ce que la copolymérisation est effectuée en l'absence de catalyseur.

6. Procédé selon l'une quelconque des revendications 1 à 4, caractérisé en ce que de l'octoate stanneux est utilisé comme catalyseur au cours de la copolymérisation.

7. Procédé selon l'une quelconque des revendications précédentes, caractérisé en ce que l'acide lactique monomère à polymériser comprend un sucre tel que le glucose ou un acide organique tel que l'acide succinique.

8. Utilisation du polyuréthane produit par le procédé selon l'une quelconque des revendications précédentes, comme substance pour emballages à jeter.

9. Utilisation du polyuréthane produit par le procédé selon l'une quelconque des revendications 1 à 7, comme substance pour film agricole ou pots de plantation.

10. Utilisation du polyuréthane produit par le procédé selon l'une quelconque des revendications 1 à 7 comme enrobage de granules d'engrais.
